# EUROPEAN PATENT APPLICATION

(11) **EP 4 318 237 A1**
(43) Date of publication of application: **07.02.2024**
(21) Application number: 21938472.4
(22) Date of filing: 30.04.2021
(51) Int. Cl.: G06F 9/54

(54) **APPARATUS AND METHOD FOR EXECUTING ATOMIC OPERATIONS**

(71) Applicant: Huawei Technologies Co., Ltd., Shenzhen, Guangdong 518129 (CN)
(72) Inventor: LI, Bing, Shenzhen, Guangdong 518129 (CN); CHENG, Chuanning, Shenzhen, Guangdong 518129 (CN); XIA, Jing, Shenzhen, Guangdong 518129 (CN); YANG, Wei, Shenzhen, Guangdong 518129 (CN)
(74) Representative: Körber, Martin Hans
(86) International application number: PCT/CN2021/091481
(87) International publication number: WO 2022/226998

(57) **Abstract**

An apparatus and a method for performing an atomic operation are provided. The apparatus for performing an atomic operation includes a remote direct memory access network interface card RNIC and an input output memory management unit IOMMU. The RNIC is configured to send a memory reading instruction to the IOMMU, where the memory reading instruction includes a target storage address. The IOMMU is configured to: read, in an exclusive manner, arithmetical data from target storage space corresponding to the target storage address, and send the arithmetical data to the RNIC, where the target storage space is provided by a memory. The RNIC is further configured to: perform an arithmetical operation on the arithmetical data to obtain an arithmetical result, and write the arithmetical result into the target storage space by using the IOMMU. The apparatus basically ensures consistency of data storage in the memory, and avoids a data inconsistency problem.

## Description

### TECHNICAL FIELD

This application relates to the field of computer technologies, and in particular, to an apparatus and a method for performing an atomic operation.

### BACKGROUND

In the fields of artificial intelligence (artificial intelligence, AI) and high-performance computing (high-performance computing, HPC), computing performance of a single node is far from meeting requirements. Usually, multiple nodes need to be formed as a cluster for computing. With the increase of communication traffic between nodes, memory copy and communication protocol processing overheads caused by communication occupy more central processing unit (central processing unit, CPU) resources. Therefore, a remote direct memory access (remote direct memory access, RDMA) technology is proposed, so that a node can directly transfer data to a memory of another node through a network without affecting an operating system, to reduce CPU resource consumption.

However, when multiple nodes (for example, multiple RDMA network interface cards or multiple processes) simultaneously access a same memory address, how to ensure consistency of data storage in the memory address is a problem to be urgently resolved.

### SUMMARY

This application provides an apparatus and a method for performing an atomic operation, to basically ensure consistency of data storage in a memory, and avoid a data inconsistency problem.

According to a first aspect, this application provides an apparatus for performing an atomic operation, including: a remote direct memory access network interface card RNIC and an input output memory management unit IOMMU. The RNIC is configured to send a memory reading instruction to the IOMMU, where the memory reading instruction includes a target storage address. The IOMMU is configured to: read, in an exclusive manner, arithmetical data from target storage space corresponding to the target storage address, and send the arithmetical data to the RNIC, where the target storage space is provided by a memory. The RNIC is further configured to: perform an arithmetical operation on the arithmetical data to obtain an arithmetical result, and write the arithmetical result into the target storage space by using the IOMMU.

In this application, in a process of performing an atomic operation, an IOMMU in a serving node may access, in an exclusive manner, target storage space in which one piece of data is stored in a memory, where the data is data on which the atomic operation is to be performed. To be specific, the IOMMU locks the target storage space, the data can only be read/written from the target storage space by the IOMMU, and another IOMMU in the serving node or a remote serving node cannot access the target storage space at the same time. In this way, consistency of data storage in the memory is basically ensured, and a data inconsistency problem caused by the another IOMMU modifying the data in the storage space after the IOMMU reads the data is avoided.

In a possible implementation, the IOMMU is specifically configured to read the arithmetical data from the target storage space after marking the target storage space as an exclusive state.

The IOMMU in the serving node marks the target storage space as the exclusive state, and then reads the arithmetical data from the target storage space. In this way, the IOMMU may lock the target storage space, the data can only be read/written from the target storage space by the IOMMU, and another IOMMU in the serving node or a remote serving node cannot access the target storage space at the same time. In this way, that the another IOMMU modifies the data in the storage space is avoided, and consistency of data storage in the memory is ensured.

In a possible implementation, the IOMMU is specifically configured to mark the target storage space as the exclusive state cacheline by cacheline.

In a possible implementation, the target storage space is greater than 8 bytes.

When the IOMMU performs a read operation or a write operation on the memory, a length of to-be-read/written data may be set to cacheline (cacheline). The cacheline may be usually 1 byte (byte, B) to 256 B, for example, 64 B, 128 B, or 256 B. Therefore, the IOMMU may perform exclusive-state locking by using the cacheline as a unit. In other words, when reading the memory, the IOMMU may exclusively occupy storage space with a cacheline length (greater than 8 bytes). In this way, a problem that only storage space with 8 bytes can be locked at a time in the conventional technology, and consequently, a requirement of data consistency of simultaneously accessing larger storage space cannot be met can be resolved.

In a possible implementation, the IOMMU is further configured to mark the target storage space as a shared state after writing the arithmetical result into the target storage space.

After the atomic operation is completed, the IOMMU may release exclusive occupation of the target storage space, in other words, mark the target storage space as the shared state. In this way, another IOMMU may read/write the target storage space.

In a possible implementation, the IOMMU is specifically configured to mark the target storage space as the shared state cacheline by cacheline.

In a possible implementation, the IOMMU is further configured to send response information to the RNIC after writing the arithmetical result into the target storage space, where the response information indicates that the IOMMU ends access to the target storage space.

The IOMMU may send the response information to the RNIC to notify the RNIC that the IOMMU has ended accessing the target storage space. In this way, the RNIC may process another atomic operation request corresponding to the target storage space.

In a possible implementation, the RNIC is further configured to send, to a remote serving node, a remote direct memory access RDMA packet including the arithmetical data, to enable the remote serving node to perform the arithmetical operation on the received arithmetical data.

The RNIC sends the RDMA packet to the remote serving node, and sends, to the remote serving node for use, the arithmetical data on which the arithmetical operation has not been performed. In this way, after receiving the arithmetical data, the remote serving node may perform the same arithmetical operation on the arithmetical data to obtain an arithmetical result, so that the remote serving node can access a memory corresponding to a local serving node, and consistency of data storage in the memory is ensured.

According to a second aspect, this application provides a method for performing an atomic operation, including: sending, by an RNIC, a memory reading instruction to an IOMMU, where the memory reading instruction includes a target storage address; reading, by the IOMMU in an exclusive manner, arithmetical data from target storage space corresponding to the target storage address, and sending the arithmetical data to the RNIC; and performing, by the RNIC, an arithmetical operation on the arithmetical data to obtain an arithmetical result, and writing the arithmetical result into the target storage space by using the IOMMU.

In a possible implementation, the reading, by the IOMMU in an exclusive manner, arithmetical data from target storage space corresponding to the target storage address includes: reading, by the IOMMU, the arithmetical data from the target storage space after marking the target storage space as an exclusive state.

In a possible implementation, the marking, by the IOMMU, the target storage space as an exclusive state includes: marking, by the IOMMU, the target storage space as the exclusive state cacheline by cacheline.

In a possible implementation, the target storage space is greater than 8 bytes.

In a possible implementation, after the writing the arithmetical result into the target storage space by using the IOMMU, the method further includes: marking, by the IOMMU, the target storage space as a shared state.

In a possible implementation, the marking, by the IOMMU, the target storage space as a shared state includes: marking, by the IOMMU, the target storage space as the shared state cacheline by cacheline.

In a possible implementation, after the writing the arithmetical result into the target storage space by using the IOMMU, the method further includes: sending, by the IOMMU, response information to the RNIC, where the response information indicates that the IOMMU ends access to the target storage space.

In a possible implementation, after the performing, by the RNIC, an arithmetical operation on the arithmetical data to obtain an arithmetical result, the method further includes: sending, by the RNIC to a remote serving node, an RDMA packet including the arithmetical data, to enable the remote serving node to perform the arithmetical operation on the received arithmetical data.

### BRIEF DESCRIPTION OF DRAWINGS

FIG. 1 is an example diagram of a structure of a multi-node cluster;
FIG. 2 is an example diagram of a structure of a multi-node cluster;
FIG. 3 is an example diagram of a structure of an apparatus for performing an atomic operation according to this application; and
FIG. 4 is an example flowchart of a method for performing an atomic operation according to this application.

### DESCRIPTION OF EMBODIMENTS

To make objectives, technical solutions, and advantages of this application clearer, the following clearly and completely describes the technical solutions in this application with reference to the accompanying drawings in this application. It is clear that the described embodiments are merely some rather than all of embodiments of this application. All other embodiments obtained by a person of ordinary skill in the art based on embodiments of this application without creative efforts shall fall within the protection scope of this application.

In embodiments, claims, and the accompanying drawings of this application, the terms "first", "second", and the like are merely used for distinguishing descriptions, and cannot be understood as indicating or implying relative importance, or as indicating or implying a sequence. In addition, the terms "include", "have", and any other variant thereof are intended to cover a non-exclusive inclusion, for example, include a series of steps or units. Methods, systems, products, or devices are not necessarily limited to those steps or units that are literally listed, but may include other steps or units that are not literally listed or that are inherent to such processes, methods, products, or devices.

It should be understood that, in this application, "at least one (item)" refers to one or more, and "multiple" refers to two or more. The term "and/or" is used to describe an association relationship between associated objects, and indicates that three relationships may exist. For example, "A and/or B" may indicate the following three cases: Only A exists, only B exists, and both A and B exist, where A and B may be singular or plural. The character "/" usually indicates an "or" relationship between the associated objects. "At least one of the following items (pieces)" or a similar expression thereof refers to any combination of these items, including any combination of singular items (pieces) or plural items (pieces). For example, at least one (piece) of a, b, or c may indicate a, b, c, "a and b", "a and c", "b and c", or "a, b, and c", where a, b, and c may be singular or plural.

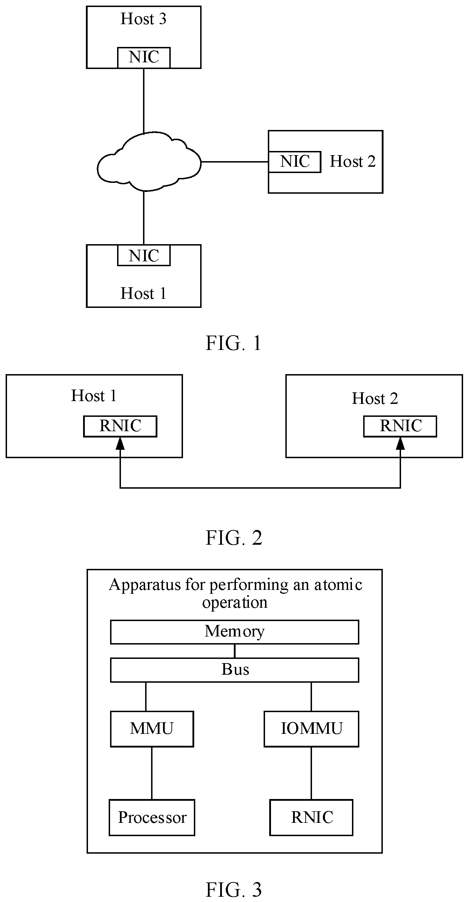

FIG. 1 is an example diagram of a structure of a multi-node cluster. As shown in FIG. 1, in the fields of AI and HPC, computing performance of a single node is far from meeting requirements. Therefore, multiple nodes may be formed as a cluster for computing. This example includes three serving nodes (a host 1, a host 2, and a host 3), and each serving node includes a network interface card (network interface card, NIC). With the increase of serving nodes, communication between the serving nodes becomes more frequent, and data synchronization communication between the serving nodes becomes a bottleneck for a cluster to expand.

Therefore, an RDMA technology emerges. During RDMA, data is quickly moved from a serving node to a memory of another serving node through a network. In this way, no impact is caused on an operating system, and resource consumption of a central processing unit (central processing unit, CPU) is greatly reduced. The RDMA may be simply understood as a hardware unit dedicated to processing data migration in the memory. Both a source end and a destination end of the migration are memories of the CPU. Therefore, a latency is low. A network interface card in a serving node that supports the RDMA technology may be referred to as an RDMA network interface card (RDMA network interface card, RNIC).

FIG. 2 is an example diagram of a structure of a multi-node cluster. In FIG. 2, the two serving nodes (the host 1 and the host 2) included in the cluster in FIG. 1 are used as an example, and both the host 1 and the host 2 support RDMA. Both the host 1 and the host 2 may use a structure shown in FIG. 3 below. The host 1 and the host 2 are connected through respective RNICs. To be specific, an RNIC 1 in the host 1 and an RNIC 2 in the host 2 are connected to each other wirelessly or through a cable.

It should be noted that, FIG. 2 shows only an example of a structure of the multi-node cluster, and does not constitute a limitation on the structure of the multi-node cluster. In other words, the multi-node cluster may further include more serving nodes, and structures of the serving nodes may be the same or different. This is not specifically limited in this application.

FIG. 3 is an example diagram of a structure of an apparatus for performing an atomic operation according to this application. As shown in FIG. 3, the apparatus may be used in the foregoing serving node (or referred to as a host), and the apparatus includes a memory, a bus, a memory management unit (memory management unit, MMU), an input output memory management unit (input output memory management unit, IOMMU), and an RNIC.

The MMU is computer hardware responsible for processing a memory access request of a processor. Functions of the MMU include conversion from a virtual address to a physical address (that is, virtual memory management), memory protection, processor cache control, and the like. The IOMMU is a memory management unit that can connect an I/O bus with a direct memory access (direct memory access, DMA) capability to the memory. For example, same as a conventional MMU (converting a processor-visible virtual address into a physical address), the IOMMU may map a device-visible virtual address (also referred to as a device address or an I/O address in this application) to a physical address.

It should be noted that, the IOMMU may also be referred to as a system memory management unit (system memory management unit, SMMU), and an ARM defines an IOMMU version of the ARM as an SMMU.

The memory, also referred to as an internal memory and a main memory, is configured to temporarily store arithmetical data in the processor and data exchanged with an external memory such as a hard disk. The memory is a bridge for communication between the external memory and the processor. All programs in the serving node run in the memory. Provided that the serving node starts to run, an operating system invokes, from the memory to the processor for arithmetical operation, data on which the arithmetical operation needs to be performed. When the arithmetical operation is completed, the processor transfers a result. RDMA may enable another serving node to directly access data in the memory through the RNIC without using the processor.

The RNIC is computer hardware designed to allow serving nodes to communicate in a network, so that multiple serving nodes can be connected to each other wirelessly or through a cable. RNICs of the multiple serving nodes may communicate with each other by transmitting RDMA packets.

Further, the MMU and the IOMMU are interconnected through the bus and the memory. The bus is an internal structure. Components of the serving node are connected through the bus.

As a core of the serving node for arithmetical operation and control, the processor is a final execution unit for information processing and program running.

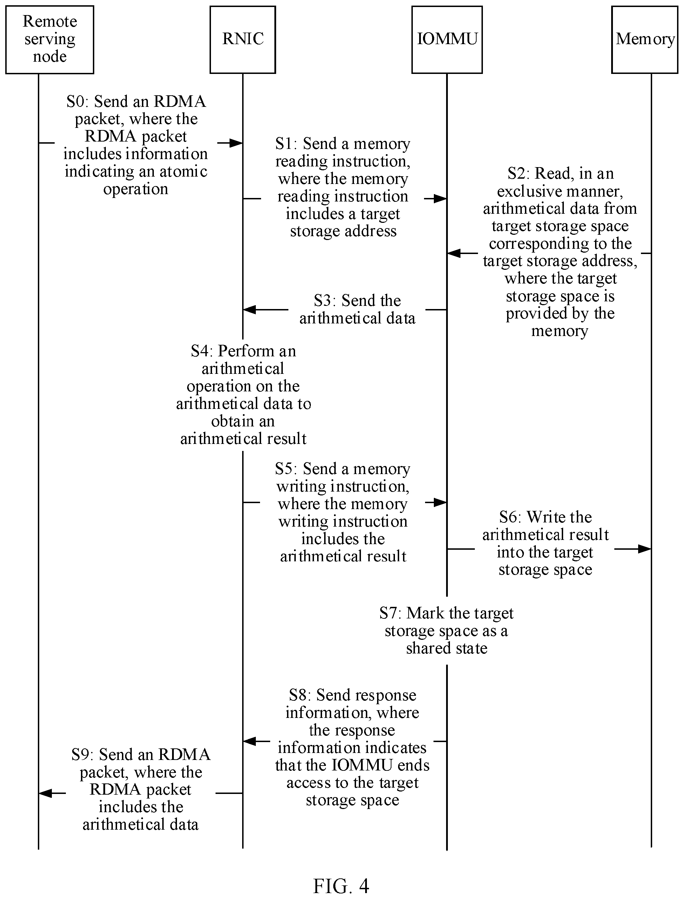

To ensure consistency of data storage in the memory address, the apparatus for performing an atomic operation in this application may perform the atomic operation by using the following steps, as shown in FIG. 4.

S0: A remote serving node sends an RDMA packet to an RNIC, where the RDMA packet includes information indicating the atomic operation.

The atomic operation (atomic operation) is an operation or a series of operations that cannot be interrupted, and is a minimum unit of an execution process. Therefore, the atomic operation is not interrupted by an operation of another thread during running.

The atomic operation usually includes three steps: reading a memory, performing an arithmetical operation, and writing the memory. The three steps may also be referred to as the following three steps in sequence: reading, modifying, and overwriting. The reading a memory refers to reading data stored in target storage space corresponding to a target storage address in the memory. The performing an arithmetical operation refers to adding (subtracting) the data obtained in the foregoing step of reading a memory and data included in the information indicating the atomic operation to obtain an arithmetical result, or comparing the data obtained in the foregoing step of reading a memory with the data included in the information indicating the atomic operation to obtain an arithmetical result. The writing the memory refers to writing, into the target storage space corresponding to the target storage address, the arithmetical result obtained in the foregoing step of performing an arithmetical operation. Based on a requirement of the atomic operation, the foregoing three steps of reading a memory, performing an arithmetical operation, and writing the memory need to be performed at a time.

The RNIC of a serving node may receive the remote direct memory access (remote direct memory access, RDMA) packet sent by the remote serving node (which may be an RNIC of the remote serving node). The RDMA packet includes the information indicating the atomic operation. For example, the remote serving node needs to perform an arithmetical operation on data stored in a memory corresponding to the serving node. Therefore, the remote serving node may send the RDMA packet to the serving node, and include, in the RDMA packet, information related to the atomic operation. For example, the atomic operation may include reading a memory, performing an arithmetical operation, and writing the memory. Correspondingly, the information related to the atomic operation may include a target storage address of the data stored in the memory corresponding to the serving node, another piece of data on which the arithmetical operation needs to be performed, and a type of the arithmetical operation (for example, addition).

S 1: The RNIC sends a memory reading instruction to an IOMMU, where the memory reading instruction includes the target storage address.

After receiving the RDMA packet, the RNIC of the serving node parses the RDMA packet to obtain the information that is related to the atomic operation and that is carried in the RDMA packet, and then sends the memory reading instruction to the IOMMU, to indicate the IOMMU to read the data from the target storage space corresponding to the target storage address in the memory. The target storage address may be a virtual address.

S2: The IOMMU reads, in an exclusive manner, arithmetical data from the target storage space corresponding to the target storage address, where the target storage space is provided by the memory.

The IOMMU is computer hardware responsible for processing a memory access request. After receiving the memory reading instruction from the RNIC, the IOMMU initiates a read operation to the memory based on the target storage address in the memory reading instruction.

In this application, the IOMMU accesses, in the exclusive manner, the target storage space corresponding to the target storage address to read the data from the target storage space. To be specific, the IOMMU locks the target storage space, the data can only be read/written from the target storage space by the IOMMU, and another IOMMU in the serving node or the remote serving node cannot access the target storage space at the same time. In this way, consistency of data storage in the memory is basically ensured, and a data inconsistency problem caused by the another IOMMU modifying the data in the target storage space after the IOMMU reads the data is avoided. For example, the IOMMU sends a read-only instruction (ReadUnique) for the target storage space to the memory, and marks an exclusive (Exclusive, E) state in the read-only instruction. A bus between the IOMMU and the memory identifies that the E state is marked in the read-only instruction. In this way, other bus operations, including accessing the target storage space by a processor by using an MMU, accessing the target storage space by another RNIC by using the IOMMU, and the like, cannot be performed to access the target storage space.

Optionally, the IOMMU may mark the target storage space as the exclusive state (E state) cacheline by cacheline.

In this application, when the IOMMU performs a read operation or a write operation on the memory, a length of to-be-read/written data may be set to cacheline (cacheline). The cacheline may be usually 1 byte (byte, B) to 256 B, for example, 64 B, 128 B, or 256 B. Therefore, the IOMMU may perform E-state locking in the read-only instruction by using the cacheline as a unit. In other words, when reading the memory, the IOMMU may exclusively occupy storage space with a cacheline length.

S3: The IOMMU sends the arithmetical data to the RNIC.

The IOMMU reads the arithmetical data from the target storage space and then sends the arithmetical data to the RNIC.

S4: The RNIC performs an arithmetical operation on the arithmetical data to obtain an arithmetical result.

The RNIC receives the arithmetical data from the IOMMU, and performs the arithmetical operation in the atomic operation on the arithmetical data to obtain the arithmetical result. For example, the RNIC adds (subtracts) the data included in the information related to the atomic operation and the arithmetical data to obtain a sum (difference) result, or compares the data included in the information related to the atomic operation with the arithmetical data to obtain a comparison result.

S5: The RNIC sends a memory writing instruction to the IOMMU, where the memory writing instruction includes the arithmetical result.

The RNIC marks the arithmetical result as WriteBack by using the memory writing instruction and transfers WriteBack to the IOMMU. The RNIC stores the arithmetical data on which the arithmetical operation has not been performed.

S6: The IOMMU writes the arithmetical result into the target storage space.

In a possible implementation, after receiving the memory writing instruction, the IOMMU matches that the arithmetical result in the memory writing instruction is corresponding to the atomic operation in the foregoing step, to further determine a target storage address corresponding to the atomic operation, and store the arithmetical result in target storage space corresponding to the target storage address. In this way, if the RNIC receives requests of multiple atomic operations, to prevent an arithmetical result of each atomic operation from being stored in incorrect storage space, the IOMMU may first match the arithmetical result from the RNIC with a to-be-processed atomic operation, and then store the arithmetical result in target storage space corresponding to a matched atomic operation. The matching of the IOMMU may be based on the arithmetical result and identification information in the atomic operation. This is not specifically limited herein.

The arithmetical result obtained after the arithmetical operation is performed on the arithmetical data is written into storage space of the arithmetical data, to keep the arithmetical result to be consistent with an arithmetical result obtained after the same arithmetical operation is performed on the arithmetical data by the remote serving node in the following. In this way, consistency of data storage in the memory is implemented.

S7: The IOMMU marks the target storage space as a shared state.

After the atomic operation is completed, the IOMMU may release exclusive occupation of the target storage space, in other words, mark the target storage space as the shared state. In this way, another IOMMU may read/write the target storage space.

S8: The IOMMU sends response information to the RNIC, where the response information indicates that the IOMMU ends access to the target storage space.

The IOMMU may send the response information to the RNIC to notify the RNIC that the IOMMU has ended accessing the target storage space. In this way, the RNIC may process another atomic operation request corresponding to the target storage space.

S9: The RNIC sends an RDMA packet to the remote serving node, where the RDMA packet includes the arithmetical data.

The RNIC sends a response (RDMA packet) to the remote serving node, and sends, to the remote serving node for use, the arithmetical data on which the arithmetical operation has not been performed. In this way, after receiving the arithmetical data, the remote serving node may perform the same arithmetical operation on the arithmetical data to obtain an arithmetical result, so that the remote serving node can access a memory corresponding to a local serving node, and consistency of data storage in the memory is ensured.

Optionally, the atomic operation may be an atomic operation having a mask.

It should be noted that, the foregoing atomic operation process is described as a series of steps or operations. It should be understood that, the foregoing process may be performed in various sequences and/or performed simultaneously. The foregoing execution sequence is not limited thereto.

In this application, in a process of performing an atomic operation, an IOMMU in a serving node may access, in an exclusive manner, target storage space in which one piece of data is stored in a memory, where the data is data on which the atomic operation is to be performed. To be specific, the IOMMU locks the target storage space, the data can only be read/written from the target storage space by the IOMMU, and another IOMMU in the serving node or a remote serving node cannot access the target storage space at the same time. In this way, consistency of data storage in the memory is basically ensured, and a data inconsistency problem caused by the another IOMMU modifying the data in the target storage space after the IOMMU reads the data is avoided.

In an implementation process, the steps in the foregoing method embodiments may be completed by using an integrated logic circuit of hardware in the processor or an instruction in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

The memory mentioned in the foregoing embodiments may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it may be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An apparatus for performing an atomic operation, comprising: a remote direct memory access network interface card RNIC and an input output memory management unit IOMMU, wherein
the RNIC is configured to send a memory reading instruction to the IOMMU, wherein the memory reading instruction comprises a target storage address;
the IOMMU is configured to: read, in an exclusive manner, arithmetical data from target storage space corresponding to the target storage address, and send the arithmetical data to the RNIC, wherein the target storage space is provided by a memory; and
the RNIC is further configured to: perform an arithmetical operation on the arithmetical data to obtain an arithmetical result, and write the arithmetical result into the target storage space by using the IOMMU.

2. The apparatus according to claim 1, wherein the IOMMU is specifically configured to:
read the arithmetical data from the target storage space after marking the target storage space as an exclusive state.

3. The apparatus according to claim 2, wherein the IOMMU is specifically configured to mark the target storage space as the exclusive state cacheline by cacheline.

4. The apparatus according to any one of claims 1 to 3, wherein the IOMMU is further configured to:
mark the target storage space as a shared state after writing the arithmetical result into the target storage space.

5. The apparatus according to claim 4, wherein the IOMMU is specifically configured to mark the target storage space as the shared state cacheline by cacheline.

6. The apparatus according to any one of claims 1 to 5, wherein the IOMMU is further configured to:
send response information to the RNIC after writing the arithmetical result into the target storage space, wherein the response information indicates that the IOMMU ends access to the target storage space.

7. The apparatus according to any one of claims 1 to 6, wherein the RNIC is further configured to send, to a remote serving node, a remote direct memory access RDMA packet comprising the arithmetical data, to enable the remote serving node to perform the arithmetical operation on the received arithmetical data.

8. A method for performing an atomic operation, comprising:
sending, by a remote direct memory access network interface card RNIC, a memory reading instruction to an input output memory management unit IOMMU, wherein the memory reading instruction comprises a target storage address;
reading, by the IOMMU in an exclusive manner, arithmetical data from target storage space corresponding to the target storage address, and sending the arithmetical data to the RNIC; and
performing, by the RNIC, an arithmetical operation on the arithmetical data to obtain an arithmetical result, and writing the arithmetical result into the target storage space by using the IOMMU.

9. The method according to claim 8, wherein the reading, by the IOMMU in an exclusive manner, arithmetical data from target storage space corresponding to the target storage address comprises:
reading, by the IOMMU, the arithmetical data from the target storage space after marking the target storage space as an exclusive state.

10. The method according to claim 9, wherein the marking, by the IOMMU, the target storage space as an exclusive state comprises:
marking, by the IOMMU, the target storage space as the exclusive state cacheline by cacheline.

11. The method according to any one of claims 8 to 10, wherein after the writing the arithmetical result into the target storage space by using the IOMMU, the method further comprises:
marking, by the IOMMU, the target storage space as a shared state.

12. The method according to claim 11, wherein the marking, by the IOMMU, the target storage space as a shared state comprises:
marking, by the IOMMU, the target storage space as the shared state cacheline by cacheline.

13. The method according to any one of claims 8 to 12, wherein after the writing the arithmetical result into the target storage space by using the IOMMU, the method further comprises:
sending, by the IOMMU, response information to the RNIC, wherein the response information indicates that the IOMMU ends access to the target storage space.

14. The method according to any one of claims 8 to 13, wherein after the performing, by the RNIC, an arithmetical operation on the arithmetical data to obtain an arithmetical result, the method further comprises:
sending, by the RNIC to a remote serving node, a remote direct memory access RDMA packet comprising the arithmetical data, to enable the remote serving node to perform the arithmetical operation on the received arithmetical data.
